(19)

**Europäisches Patentamt**
**European Patent Office**
**Office européen des brevets**

(11) **EP 4 654 703 A1**

(12) **EUROPEAN PATENT APPLICATION**
published in accordance with Art. 153(4) EPC

(43) Date of publication:
26.11.2025 Bulletin 2025/48

(21) Application number: 23916665.5

(22) Date of filing: 16.01.2023

(51) International Patent Classification (IPC):
*H04W 72/044* (2023.01)

(52) Cooperative Patent Classification (CPC):
H04B 7/06; H04W 72/044; H04W 72/23

(86) International application number:
PCT/CN2023/072461

(87) International publication number:
WO 2024/152174 (25.07.2024 Gazette 2024/30)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **LIU, Min**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **INFORMATION TRANSMISSION METHOD AND APPARATUS, COMMUNICATION DEVICE,
AND STORAGE MEDIUM**

(57)    Embodiments of the present disclosure relate to an information transmission method and apparatus, a communication device, and a storage medium. An access network device sends control information carrying N beam identification fields to a network controlled repeater, wherein each beam identification field is used for carrying beam indication information for determining a beam identifier of an access link, N is less than or equal to M, M is the maximum number of beams supported by the access link, and at least one of N, the association between the beam indication information and the beam identifier, and the bit width of each beam identification field is indicated by first configuration information.

FIG. 3

## Description

### FIELD

The present invention relates to, but is not limited to, the field of wireless communication technology, and more particularly to a method and apparatus for information transmission, a communication device, and a storage medium.

### BACKGROUND

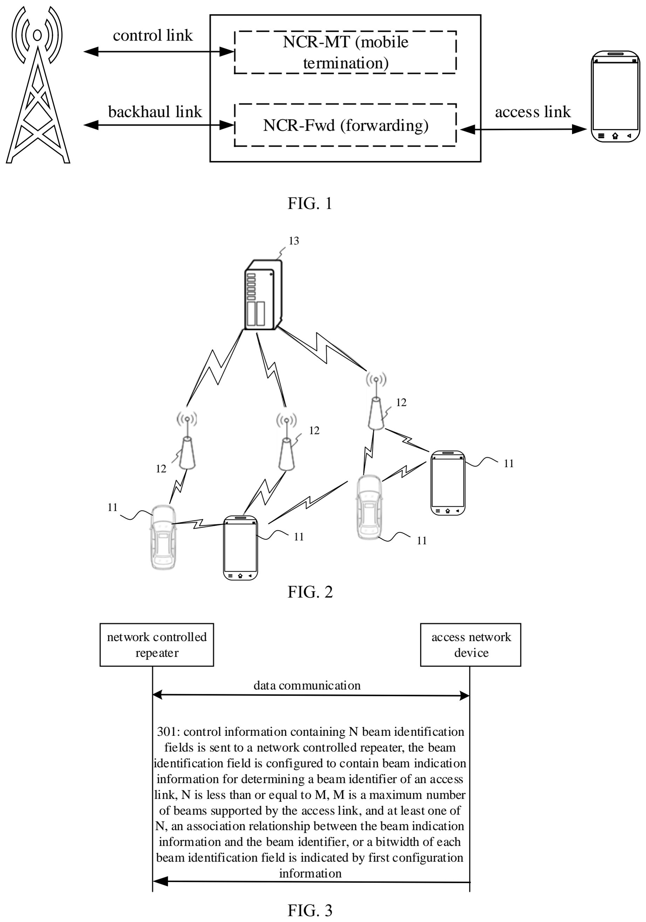

A network controlled repeater (NCR) may improve signal coverage of a mobile communication system in a low-cost way. As shown in FIG. 1, the NCR includes two parts: a mobile termination function may be used to receive a control command sent by a base station, and the control command may be used to control a behavior of a forwarding (FWD) function, i.e., the behavior in a backhaul link and an access link, such as beam indication direction, forwarding on and off, among others.

### SUMMARY

In view of this, embodiments of the present invention provide a method and apparatus for information transmission, a communication device, and a storage medium.

According to a first aspect of embodiments of the present invention, there is provided a method for information transmission, which is applied to an access network device, and includes: sending control information containing N beam identification fields to a network controlled repeater, where the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

In an embodiment, the method further includes: sending the first configuration information to the network controlled repeater.

In an embodiment, the first configuration information is determined by the access network device; or the first configuration information is determined according to a predefined rule.

In an embodiment, in a case where the beam indication information is a preset value, the beam indication information does not indicate a valid beam identifier.

In an embodiment, the beam indication information contained by each of the N beam identification fields is the preset value, indicating that at least forwarding (FWD) function of the network controlled repeater is turned off.

In an embodiment, the control information further includes: a time-domain resource field configured to contain resource indication information for determining a time-domain resource corresponding to each beam identifier.

In an embodiment, there are N time-domain resource fields, and each time-domain resource field corresponds to one beam identifier; or there is one time-domain resource field, each beam identifier occupies one of time-domain sub-resources of a time-domain resource indicated by the resource indication information, and the time-domain sub-resources do not overlap with each other.

In an embodiment, there is one time-domain resource field, and the time-domain resource indicated by the resource indication information is evenly allocated to the N beam identifiers.

According to a second aspect of embodiments of the present invention, there is provided a method for information transmission, which is applied to a network controlled repeater, and includes: receiving control information containing N beam identification fields from an access network device, where the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

In an embodiment, the method further includes: receiving the first configuration information from the access network device.

In an embodiment, the first configuration information is determined by the access network device; or the first configuration information is determined according to a predefined rule.

In an embodiment, in a case where the beam indication information is a preset value, the beam indication information does not indicate a valid beam identifier.

In an embodiment, the method further includes: in response to the beam indication information contained by each of the N beam identification fields is a preset value, determining that at least forwarding (FWD) function of the network controlled repeater is turned off.

In an embodiment, the control information further includes a time-domain resource field configured to contain resource indication information for determining a time-domain resource corresponding to each beam identifier.

In an embodiment, there are N time-domain resource fields, and each time-domain resource field corresponds to one beam identifier; or there is one time-domain resource field, each beam identifier occupies one of time-domain sub-resources of a time-domain resource indicated by the resource indication information, and the time-domain sub-resources do not overlap with each other.

In an embodiment, there is one time-domain resource field, and the time-domain resource indicated by the resource indication information is evenly allocated to the N beam identifiers.

According to a third aspect of embodiments of the present invention, there is provided an apparatus for information transmission, which is set in an access network device, and includes: a transceiver module, configured to send control information containing N beam identification fields to a network controlled repeater, where the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

In an embodiment, the transceiver module is further configured to: send the first configuration information to the network controlled repeater.

In an embodiment, the first configuration information is determined by the access network device; or the first configuration information is determined according to a predefined rule.

In an embodiment, in a case where the beam indication information is a preset value, the beam indication information does not indicate a valid beam identifier.

In an embodiment, the beam indication information contained by each of the N beam identification fields is the preset value, indicating that at least forwarding (FWD) function of the network controlled repeater is turned off.

In an embodiment, the control information further includes: a time-domain resource field configured to contain resource indication information for determining a time-domain resource corresponding to each beam identifier.

In an embodiment, there are N time-domain resource fields, and each time-domain resource field corresponds to one beam identifier; or there is one time-domain resource field, each beam identifier occupies one of time-domain sub-resources of a time-domain resource indicated by the resource indication information, and the time-domain sub-resources do not overlap with each other.

In an embodiment, there is one time-domain resource field, and the time-domain resource indicated by the resource indication information is evenly allocated to the N beam identifiers.

According to a fourth aspect of embodiments of the present invention, there is provided an apparatus for information transmission, which is set in a network controlled repeater, and includes: a transceiver module, configured to receive control information containing N beam identification fields from an access network device, where the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

In an embodiment, the transceiver module is further configured to receive the first configuration information from the access network device.

In an embodiment, the first configuration information is determined by the access network device; or the first configuration information is determined according to a predefined rule.

In an embodiment, in a case where the beam indication information is a preset value, the beam indication information does not indicate a valid beam identifier.

In an embodiment, the apparatus further includes: a processing module configured to: in response to the beam indication information contained by each of the N beam identification fields is a preset value, determine that at least forwarding (FWD) function of the network controlled repeater is turned off.

In an embodiment, the control information further includes a time-domain resource field configured to contain resource indication information for determining a time-domain resource corresponding to each beam identifier.

In an embodiment, there are N time-domain resource fields, and each time-domain resource field corresponds to one beam identifier; or there is one time-domain resource field, each beam identifier occupies one of time-domain sub-resources of a time-domain resource indicated by the resource indication information, and the time-domain sub-resources do not overlap with each other.

In an embodiment, there is one time-domain resource field, and the time-domain resource indicated by the resource indication information is evenly allocated to the N beam identifiers.

According to a fifth aspect of embodiments of the present invention, there is provided a communication device, which includes: a processor; and a memory for storing instructions executable by the processor, and the processor is configured to: implement the method for information transmission as described in the first aspect and the second aspect, when running the instructions.

According to a sixth aspect of embodiments of the present invention, there is provided a computer storage medium having stored therein computer executable programs that, when executed by a processor, cause the method for information transmission as described in the first aspect and the second aspect to be implemented.

The method and apparatus for information transmission, a communication device and a storage medium according to embodiments of the present invention, the access network device sends control information containing N beam identification fields to a network controlled repeater, the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information. In this way, the access network device sends the control information containing beam indication information of N beams to the network controlled repeater, and the beam identifier of the beam identification field may be determined according to the first configuration information, thereby realizing the indication of the beam of the access link by the access network device, and realizing the practical application of the beam forming technology of the network controlled repeater in the mobile communication system, thereby improving the signal coverage of the mobile communication system.

It is to be understood that both the foregoing general description and the following detailed description are illustrative and explanatory and are not restrictive of embodiments of the present invention.

## BRIEF DESCRIPTION OF THE DRAWINGS

The accompanying drawings, which are incorporated in and constitute a part of this specification, illustrate embodiments consistent with the present invention and, together with this specification, serve to explain the principles of embodiments of the present invention.

FIG. 1 is a schematic diagram showing relay communication in a wireless communication system according to an illustrative embodiment;
FIG. 2 is a schematic diagram showing a wireless communication system according to an illustrative embodiment;
FIG. 3 is a schematic flow chart showing a method for information transmission according to an illustrative embodiment;
FIG. 4 is a schematic flow chart showing a method for information transmission according to an illustrative embodiment;
FIG. 5 is a schematic flow chart showing a method for information transmission according to an illustrative embodiment;
FIG. 6 is a schematic flow chart showing a method for information transmission according to an illustrative embodiment;
FIG. 7 is a schematic flow chart showing a method for information transmission according to an illustrative embodiment;
FIG. 8 is a schematic flow chart showing a method for information transmission according to an illustrative embodiment;
FIG. 9 is a schematic flow chart showing a method for information transmission according to an illustrative embodiment;

FIG. 10 is a schematic block diagram showing an apparatus for information transmission according to an illustrative embodiment;
FIG. 11 is a schematic block diagram showing an apparatus for information transmission according to an illustrative embodiment;
FIG. 12 is a schematic block diagram showing a network controlled repeater according to an illustrative embodiment; and
FIG. 13 is a schematic block diagram showing a base station according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

Terms used in embodiments of the present invention are for the purpose of describing specific embodiments, but should not be construed to limit the present invention. As used in the embodiments of the present invention and the appended claims, "a/an", "said" and "the" in singular forms are intended to include plural forms, unless clearly indicated in the context otherwise. It should also be understood that the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. Depending on the context, the term "if" as used herein may be construed to mean "when" or "upon" or "in response to determining".

Referring to FIG. 2, which is a schematic diagram showing a wireless communication system according to embodiments of the present invention. As shown in FIG. 2, the wireless communication system is a communication system based on a cellular mobile communication technology, and may include several terminals 11 and several base stations 12.

The terminal 11 may refer to a device that provides voice and/or data connectivity to a user. The terminal 11 can communicate with one or more core network function nodes via a radio access network (RAN). The terminal 11 may be an Internet of Things terminal, such as a sensor device, a mobile phone (or referred to as a "cellular" phone) and a computer with an Internet of Things terminal. For example, the terminal 11 may be a fixed, portable, pocket-sized, handheld, built-in computer or vehicle-mounted apparatus, such as a station (STA), a subscriber unit, a subscriber station, a mobile station, a mobile, a remote station, an access point, a remote terminal, an access terminal, a user terminal, a user agent, or a user equipment (UE). Alternatively, the terminal 11 may be a device of an unmanned aerial vehicle. Alternatively, the terminal 11 may be a vehicle-mounted device, for example, an electronic control unit with a wireless communication function, or a wireless communication device externally connected with an electronic control unit. Alternatively, the terminal 11 may be a roadside device, such as a street lamp, a signal lamp or other roadside devices with a wireless communication function.

The base station 12 may be an access network device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN), or a MTC system.

The base station 12 may be an evolved base station (eNB) used in the 4G system. Alternatively, the base station 12 may be a base station (gNB) adopting a central-allocated architecture in the 5G system. When adopting the central-allocated architecture, the base station 12 usually includes a central unit (CU) and at least two allocated units (DUs). The central unit is provided with protocol stacks of a packet data convergence protocol (PDCP) layer, a radio link control (RLC) layer and a media access control (MAC) layer. The allocated units are provided with a protocol stack of a physical (PHY) layer. The specific implementation of the base station 12 is not limited in embodiments of the present invention.

A wireless connection may be established between the base station 12 and the terminal 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

Several base stations 12 are connected to the network management device 13, respectively. The network management device 13 may be a core network function node in the wireless communication system, for example, the network management device 13 may be a mobility management entity (MME) in an evolved packet core (EPC) function node. Alternatively, the network management device may be other core network functional nodes, such as a serving gateway (SGW), a public data network gateway (PGW), a policy and charging rules function (PCRF) or a home subscriber server (HSS), an access and mobility management function (AMF), a policy control function (PCF), a unified data management (UDM), a user plane function (UPF), a network exposure function (NEF), a session management function (SMF), or the like. The implementation form of the network management device 13 is not limited in embodiments of the present invention.

In order to facilitate the understanding of those skilled in the art, multiple implementations are listed in embodiments of the present invention to clearly illustrate technical solutions as set forth in embodiments of the present invention. Of course, those skilled in the art can understand that various embodiments provided in the present invention may be executed separately, in combination with the methods as described in other embodiments of the present invention, or further in combination with some methods in other related art, which is not limited in embodiments of the present invention.

In a mobile communication system (such as a 5G mobile communication system), a base station may use the beamforming technology to provide a beam for signal coverage in a specific direction. A network controlled repeater also uses the beamforming technology to provide a beam for signal coverage in a specific direction.

How to indicate a beam of an access link to the network controlled repeater and indicate time-domain resource configuration information of the beam to the network controlled repeater is a problem to be solved.

As shown in FIG. 3, example embodiments of the present invention provide a method for information transmission, which is applied to an access network device, and includes a following step.

In step 301, control information containing N beam identification fields is sent to a network controlled repeater, the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

The access network device may include a base station in a cellular mobile communication system (such as a 5G or subsequent cellular mobile communication system).

In a possible embodiment, the access network device may send information for controlling the network controlled repeater to the network controlled repeater via a control link.

In a possible embodiment, sending the control information containing the N beam identification fields to the network controlled repeater includes: sending the control information containing the N beam identification fields to mobile termination in the network controlled repeater.

In a possible embodiment, the access network device may send the control information containing the N beam identification fields to the network controlled repeater via the control link.

In a possible embodiment, the control information may include: downlink control information (DCI). In particular, the DCI is scrambled by an NCR-specific RNTI.

In a possible embodiment, one beam identification field is configured to contain beam indication information of one beam identifier.

In a possible embodiment, the control information is associated with, but not limited to, a beam identifier of an aperiodic beam.

The beam identifier may be used to uniquely identify a beam of the access link. The access link may be a link between a UE and the network controlled repeater. The beam identifier of the access link is used to identify a beam of the access link. Here, the beam of the access link may be generated by the network controlled repeater.

For the access link, the network controlled repeater may support M beams at most. The control information may contain N beam identification fields for indicating N beam identifiers, that is, the control information may be used to indicate N beams at most at the same time.

In a possible embodiment, the network controlled repeater may obtain the beam indication information contained in each of the N beam identification fields according to the received control information, and determine beam identifiers corresponding to the N beams respectively. That is, the network controlled repeater may determine the beam used by the network controlled repeater for relaying.

In an embodiment, the first configuration information is determined by the access network device; or the first configuration information is determined according to a predefined rule.

In a possible embodiment, the predefined rule may be negotiated between the network device and the network controlled repeater.

In a possible embodiment, the predefined rule may be specified by a communication protocol.

Here, the association relationship between the beam indication information and the beam identifier may include but is not limited to at least one of: a mapping relationship between the beam indication information and the beam identifier; a rule for determining the beam identifier according to the beam indication information; or different beam identifiers respectively corresponding to different beam indication information.

Based on the first configuration information, the NCR may determine a length of the control information according to N and a bitwidth of the beam identification field, etc. The beam indication information contained in each beam identification field is determined according to the association relationship between the beam indication information and the beam identifier, thereby determining the beam of the access link.

The network controlled repeater may determine the beam generated in the access link based on the control information.

In this way, the access network device sends the control information containing beam indication information of N beams to the network controlled repeater, and the beam identifier of the beam identification field may be determined according to the first configuration information, thereby realizing the indication of the beam of the access link by the access network device, and realizing the practical application of the beam forming technology of the network controlled repeater in the mobile communication system, thereby improving the signal coverage of the mobile communication system.

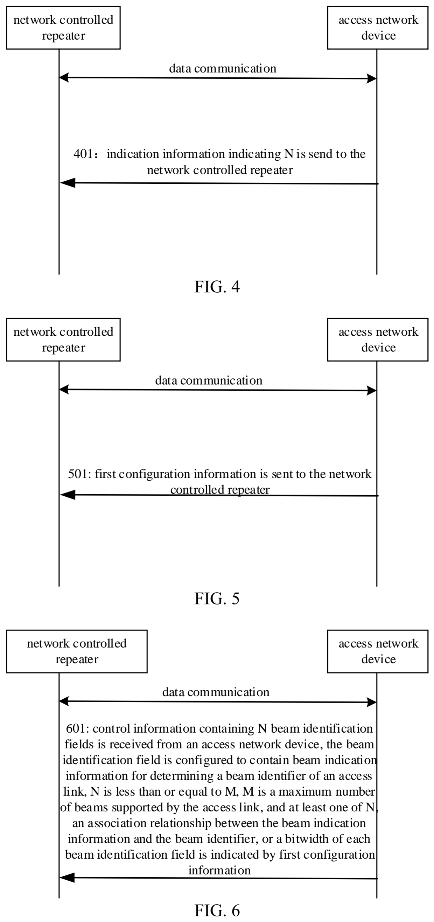

As shown in FIG. 4, example embodiments of the present invention provide a method for information transmission, which is applied to an access network device, and includes a following step.

In step 401, indication information indicating N is send to the network controlled repeater.

In a possible embodiment, N may not be indicated by the first configuration information, but may be indicated by indication information different from the first configuration information.

In a possible embodiment, sending the indication information indicating N to the network controlled repeater includes: sending the indication information indicating N to the network controlled repeater before sending the control information containing the N beam identification fields to the network controlled repeater.

In a possible embodiment, sending the indication information indicating N to the network controlled repeater includes: sending configuration information via an RRC signaling.

The access network device can indicate the number of beams of the access link by sending the indication information indicating N to the network controlled repeater. The network controlled repeater can determine the number of beam identifiers of the access link included in the control information.

As shown in FIG. 5, example embodiments of the present invention provide a method for information transmission, which is applied to an access network device, and includes a following step.

In step 501, first configuration information is sent to the network controlled repeater.

In a possible embodiment, sending the first configuration information to the network controlled repeater includes: sending the first configuration information to the network controlled repeater before sending the control information containing the N beam identification fields to the network controlled repeater.

In a possible embodiment, if the first configuration information is specified by a communication protocol, the network controlled repeater may determine the first configuration information based on the communication protocol.

Based on the first configuration information, the network controlled repeater may determine a length of the control information according to N and the bitwidth of the beam identification field.

In a possible embodiment, the network controlled repeater may determine a length of DCI according to N and the bitwidth of the beam identification field.

In a possible embodiment, the first configuration information is contained in an RRC signaling.

In an embodiment, in a case where the beam indication information is a preset value, the beam indication information does not indicate a valid beam identifier.

Here, one or more preset values may be configured for the first configuration information. In the case where the beam indication information is a preset value, the beam indication information does not indicate any valid beam identifier. That is, in a case where a bit code in the beam identification field is a preset value, the beam identification field is not used to indicate any valid beam identifier.

In a possible embodiment, the valid beam identifier may be a beam identifier that actually exists in the NCR.

For example, a bitwidth of each beam identification field; and/or the beam identifier corresponding to the beam indication information in each beam identification field (i.e., the bit code in the beam identification field) is indicated by the base station through the first configuration information.

For example, the base station may configure NCR-ap-beam::=[-1, 0, 1, 2, 7, 8] via RRC; if a bit code is 0, a corresponding beam ID in the first configuration information is -1, which is not a valid beam identifier, not indicating any valid beam identifier; if the bit code is 2, it corresponds to beam identifier#1 (ID#1).

For example, the bitwidth of each beam identification field; and/or the beam identifier corresponding to the beam indication information in each beam identification field (i.e., the bit code in the beam identification field) is predefined, that is, the first configuration information is predefined.

For example, in a standard predefined manner, when the bit codes indicate a special state, such as the bit codes all indicate 1, it means that no valid beam is indicated, and other valid values indicate beam identifiers. For example, the bit code is 1, which corresponds to beam#1; the bit code is 7, which corresponds to beam#7.

For example, the maximum number of beams supported by the NCR in the access link is M, and the DCI sent by the base station to the network controlled repeater includes N beam identification fields (or called beam indication fields), that is, one DCI indicates at most N beams at a time.

If the first configuration information is determined based on a predefined rule, the bitwidth of each beam identification field may be expressed by a formula (1):

$$\text{bitwidth} = \text{ceiling}[\log2(M+1)] \ (1),$$

where bitwidth represents the bitwidth of the beam identification field, ceiling represents rounding up, and 1 represents a defined special state (i.e., the above preset value).

If the first configuration information is sent by the base station to the network controlled repeater, such as via RRC, the bitwidth of each beam identification field may be expressed by a formula (2):

$$\text{bitwidth} = \text{ceiling}[\log2(X)] \ (2),$$

where bitwidth represents the bitwidth of the beam identification field, ceiling represents rounding up, and X represents X beam IDs selected from M beam IDs, that is, X is the number of beams that may be indicated, and X IDs generally include the special state, such as -1.

The network controlled repeater may determine the length of the beam information in the DCI according to N and the bitwidth of the beam identification field, and further determine the length of the DCI.

In an embodiment, the beam indication information contained by each of the N beam identification fields is the preset value, indicating that at least forwarding (Fwd) function of the network controlled repeater is turned off.

If at least the Fwd function of the network controlled repeater is to be turned off, the base station may set the beam indication information of each of the N beam identification fields in the control information to the preset value, that is, none of the N beam identification fields indicates any valid beam identifier. After the network controlled repeater receives the control information, if it is determined that the beam indication information of each of the N beam identification fields is the preset value, it may be determined that at least the Fwd function of the network controlled repeater is turned off.

In a possible embodiment, turning off at least the Fwd function of the network controlled repeater includes at least one of: the network controlled repeater stopping the relay service; or the network controlled repeater not forwarding signals.

In this way, on the one hand, the access network device may indicate the bitwidth of the beam identification field and the number of beam identification fields to the network controlled repeater through the first configuration information, and the network controlled repeater may determine the length of the control information, and perform reception of the control information based on the length of the control information, such as performing blind detection, etc., thereby reducing the complexity of the reception of the control information. On the other hand, the access network device may indicate the association relationship between the beam indication information and the beam identifier to the network controlled repeater through the first configuration information, so that the network controlled repeater may determine the beam identifier of the access link, thereby realizing the signal forwarding of the network controlled repeater in a specific direction. On another hand, the access network device may indicate to the network controlled repeater through the first configuration information that the beam identification field does not indicate any valid beam identifier, and whether at least the FWD function of the network controlled repeater is turned off.

In an embodiment, the control information further includes: a time-domain resource field configured to contain resource indication information for determining a time-domain resource corresponding to each beam identifier.

Here, there may be one or more time-domain resource fields, and the resource indication information of each time-domain resource field may be used to indicate the time-domain resource.

In a possible embodiment, one time-domain resource field may indicate a time-domain resource corresponding to one beam identification field.

In a possible embodiment, one time-domain resource field may indicate a time-domain resource corresponding to a plurality of beam identification fields.

In a possible embodiment, a correspondence between the beam identification field and the time-domain resource field is determined based on a predefined rule.

In this way, the resource indication information contained in the time-domain resource field may be used by the access network device to indicate the time-domain resource corresponding to each beam identifier to the network controlled repeater. The network controlled repeater may perform beam-based data transmission based on the time-domain resource to realize the relay of mobile communication.

In an embodiment, there are N time-domain resource fields, and each time-domain resource field corresponds to one beam identifier; or there is one time-domain resource field, each beam identifier occupies one of time-domain sub-resources of the time-domain resource indicated by the resource indication information, and the time-domain sub-resources do not overlap with each other.

In a possible embodiment, there are N time-domain resource fields, and each time-domain resource field may correspond to one beam identification field.

In a possible embodiment, the time-domain resource fields may correspond to the beam identification fields in a one-to-one correspondence according to their respective orders in the control information.

In a possible embodiment, the resource indication information may adopt, but not limited to, the following form to indicate the time-domain resource: {X, Y, Z}, where X represents an offset between a starting slot of the time-domain resource and a slot for receiving the control information, Y represents a starting symbol of the time-domain resource in the starting slot, and Z represents the number of symbols lasted by the time-domain resource.

For example, the resource indication information is {1, 1, 10}. Assuming that the network controlled repeater receives DCI (control information) in slot#n, the beam may be transmitted in the 1st to 10th symbols in slot#n+1.

In a possible embodiment, each of the N beams may occupy a part of the time-domain resource indicated by the resource indication information, that is, occupy a time-domain sub-resource of the time-domain resource, and the time-domain sub-resources do not overlap with each other.

In an embodiment, there is one time-domain resource field, and the time-domain resource indicated by the resource indication information is evenly allocated to the N beam identifiers.

If the control information has only one time-domain resource field, and the resource indication information in the time-domain resource field indicates only one time-domain resource, the time-domain resource may be evenly allocated to the beams corresponding to the N beam identifiers for use.

In a possible embodiment, the N beams may occupy the time-domain resource in sequence according to the order of their corresponding beam identification fields.

For example, if the control information has only one time-domain resource field, and the resource indication information in the time-domain resource field indicates one time-domain resource {1, 1, 3}; and the control information has three beam identification fields, indicating three beam identifiers: beam#1, beam#2 and beam#3. Assuming that the network controlled repeater receives the DCI (control information) in slot#n, beam#1 is transmitted in the first symbol of slot#n+1; beam#2 is transmitted in the second symbol of slot#n+1; and beam#3 is transmitted in the third symbol of slot#n+1.

In this way, the network controlled repeater may determine the beam identifier and the time-domain resource of the beam that needs to communicate in the access link according to the control information, thereby realizing beam-based relay communication.

The order of the steps listed in the above embodiments is not intended to limit the execution order of the steps. The steps may be executed in the listed step order, or may not be executed in the listed step order, without contradiction. The individual steps may be implemented as separate embodiments without contradiction, or multiple steps may be combined together as an embodiment to implement.

The above embodiments may be implemented individually, or two or more embodiments may be combined together to implement if there is no contradiction.

In the above embodiments, the method for information transmission performed at the side of the network controlled repeater and the method for information transmission performed at the side of the access network may be in one to one correspondence, so the same explanations or features will not be repeated again, and reference may be made to the embodiments of the corresponding side.

As shown in FIG. 6, example embodiments of the present invention provide a method for information transmission, which is applied to a network controlled repeater, and includes a following step.

In step 601, control information containing N beam identification fields is received from an access network device, the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

The access network device may include a base station in a cellular mobile communication system (such as a 5G or subsequent cellular mobile communication system).

In a possible embodiment, the control information may include: downlink control information (DCI). In particular, the DCI is scrambled by an NCR-specific RNTI.

In a possible embodiment, the access network device may send information for controlling the network controlled repeater to the network controlled repeater via a control link.

In a possible embodiment, the network controlled repeater may receive the control information containing the N beam identification fields via a control link.

In a possible embodiment, receiving the control information containing the N beam identification fields from the access network device includes: receiving, by a mobile termination in the network controlled repeater, the control information containing the N beam identification fields from the access network device.

In a possible embodiment, one beam identification field is configured to contain beam indication information of one beam identifier.

In a possible embodiment, the control information is associated with, but not limited to, a beam identifier of an aperiodic beam.

The beam identifier may be used to uniquely identify a beam of the access link. The access link may be a link between a UE and the network controlled repeater. The beam identifier of the access link is used to identify a beam of the access link. Here, the beam of the access link may be generated by the network controlled repeater.

For the access link, the network controlled repeater may support M beams at most. The control information may contain N beam identification fields for indicating N beam identifiers, that is, the control information may be used to indicate N beams at the same time.

In a possible embodiment, the network controlled repeater may obtain the beam indication information contained in each of the N beam identification fields according to the received control information, and determine beam identifiers corresponding to the N beams respectively. That is, the network controlled repeater may determine the beam used by the network controlled repeater for relaying.

In an embodiment, the first configuration information is determined by the access network device; or the first configuration information is determined according to a predefined rule.

In a possible embodiment, the predefined rule may be negotiated between the network device and the network controlled repeater.

In a possible embodiment, the predefined rule may be specified by a communication protocol.

Here, the association relationship between the beam indication information and the beam identifier may include but is not limited to at least one of: a mapping relationship between the beam indication information and the beam identifier; a rule for determining the beam identifier according to the beam indication information; or different beam identifiers respectively corresponding to different beam indication information.

Based on the first configuration information, the NCR or the like may determine a length of the control information according to N and a bitwidth of the beam identification field, etc. The beam indication information contained in each beam identification field is determined according to the association relationship between the beam indication information and the beam identifier, thereby determining the beam of the access link.

The network controlled repeater may determine the beam generated in the access link based on the control information.

In this way, the network controlled repeater receives the beam indication information of N beams contained in the control information, and may determine the beam identifier of the beam identification field according to the first configuration information, and may determine the beam of the access link, thereby realizing the practical application of the beam forming technology of the network controlled repeater in the mobile communication system, thereby improving the signal coverage of the mobile communication system.

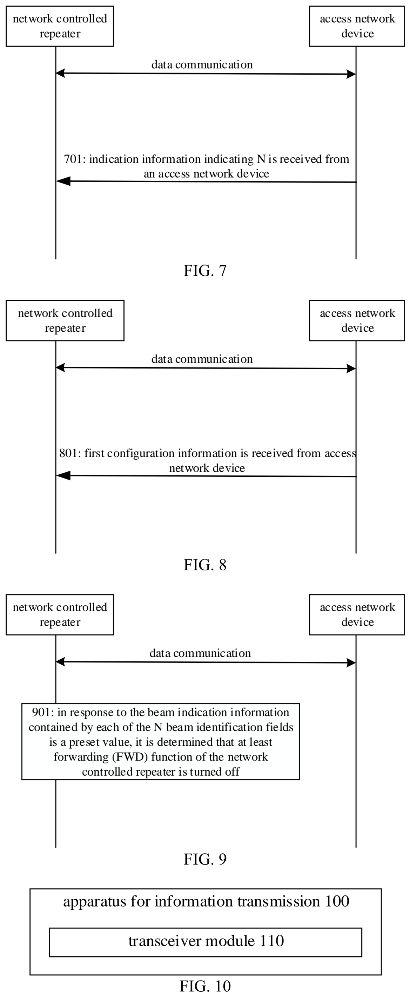

As shown in FIG. 7, example embodiments of the present invention provide a method for information transmission, which is applied to a network controlled repeater, and includes a following step.

In step 701, indication information indicating N is received from an access network device.

In a possible embodiment, sending the indication information indicating N to the network controlled repeater includes: sending the indication information indicating N to the network controlled repeater before sending the control information containing the N beam identification fields to the network controlled repeater.

In a possible embodiment, sending the indication information indicating N to the network controlled repeater includes: sending configuration information via an RRC signaling.

The network controlled repeater can determine the number of beam identifiers of the access link included in the control information by receiving the indication information indicating N.

As shown in FIG. 8, example embodiments of the present invention provide a method for information transmission, which is applied to a network controlled repeater, and includes a following step.

In step 801, first configuration information is received from access network device.

In a possible embodiment, sending the first configuration information to the network controlled repeater includes: sending the first configuration information to the network controlled repeater before sending the control information containing the N beam identification fields to the network controlled repeater.

In a possible embodiment, if the first configuration information is specified by a communication protocol, the network controlled repeater may determine the first configuration information based on the communication protocol.

Based on the first configuration information, the network controlled repeater may determine a length of the control information according to N and the bitwidth of the beam identification field.

In a possible embodiment, the network controlled repeater may determine a length of DCI according to N and the bitwidth of the beam identification field.

In a possible embodiment, the first configuration information is contained in an RRC signaling.

In an embodiment, in a case where the beam indication information is a preset value, the beam indication information does not indicate a valid beam identifier.

Here, one or more preset values may be configured for the first configuration information. In the case where the beam indication information is a preset value, the beam indication information does not indicate any valid beam identifier. That is, in a case where a bit code in the beam identification field is a preset value, the beam identification field is not used to indicate a beam identifier.

In a possible embodiment, the valid beam identifier may be a beam identifier that actually exists in the NCR.

For example, a bitwidth of each beam identification field; and/or the beam identifier corresponding to the beam indication information in each beam identification field (i.e., the bit code in the beam identification field) is indicated by the base station through the first configuration information.

For example, the base station may configure NCR-ap-beam::=[-1, 0, 1, 2, 7, 8] via RRC; if a bit code is 0, a corresponding beam ID in the first configuration information is -1, which is not a valid beam identifier, not indicating any valid beam identifier; if the bit code is 2, it corresponds to beam identifier#1 (ID#1).

For example, the bitwidth of each beam identification field; and/or the beam identifier corresponding to the beam indication information in each beam identification field (i.e., the bit code in the beam identification field) is predefined, that is, the first configuration information is predefined.

For example, in a standard predefined manner, when the bit codes indicate a special state, such as the bit codes all indicate 1, it means that no valid beam is indicated, and other valid values indicate beam identifiers. For example, the bit code is 1, which corresponds to beam#1; the bit code is 7, which corresponds to beam#7.

For example, the maximum number of beams supported by the NCR in the access link is M, and the DCI sent by the base station to the network controlled repeater includes N beam identification fields (or called beam indication fields), that is, one DCI indicates at most N beams at a time.

If the first configuration information is determined based on a predefined rule, the bitwidth of each beam identification field may be expressed by a formula (1):

$$bitwidth = ceiling[log2(M+1)] \ (1),$$

where bitwidth represents the bitwidth of the beam identification field, ceiling represents rounding up, and 1 represents a defined special state (i.e., the above preset value).

If the first configuration information is sent by the network controlled repeater to the network controlled repeater, such as via RRC, the bitwidth of each beam identification field may be expressed by a formula (2):

$$bitwidth = ceiling[log2(X)] \ (2),$$

where bitwidth represents the bitwidth of the beam identification field, ceiling represents rounding up, and X represents X beam IDs selected from M beam IDs, that is, X is the number of beams that may be indicated, and X IDs generally include the special state, such as -1.

The network controlled repeater may determine the length of the beam information in the DCI according to N and the bitwidth of the beam identification field, and further determine the length of the DCI.

As shown in FIG. 9, example embodiments of the present invention provide a method for information transmission, which is applied to a network controlled repeater, and includes a following step.

In step 901, in response to the beam indication information contained by each of the N beam identification fields is a preset value, it is determined that at least forwarding (FWD) function of the network controlled repeater is turned off.

If the network controlled repeater is to be turned off, the base station may set the beam indication information of each of the N beam identification fields in the control information to the preset value. That is, none of the N beam identification fields indicates any valid beam identifier. After the network controlled repeater receives the control information, if it is determined that the beam indication information of each of the N beam identification fields is the preset value, it may be determined that at least the Fwd function of the network controlled repeater is turned off.

In a possible embodiment, turning off at least the Fwd function of the network controlled repeater includes at least one of: the network controlled repeater stopping the relay service; or the network controlled repeater not forwarding signals.

In this way, on the one hand, the access network device may indicate the bitwidth of the beam identification field and the number of beam identification fields to the network controlled repeater through the first configuration information, and the network controlled repeater may determine the length of the control information, and perform reception of the control information based on the length of the control information, such as performing blind detection, etc., thereby reducing the complexity of the reception of the control information. On the other hand, the access network device may indicate the association relationship between the beam indication information and the beam identifier to the network controlled repeater through the first configuration information, so that the network controlled repeater may determine the beam identifier of the access link, thereby realizing the signal forwarding of the network controlled repeater in a specific direction. On another hand, the access network device may indicate to the network controlled repeater through the first configuration information that the beam identification field does not indicate a beam identifier, and whether at least the FWD function of the network controlled repeater is turned off.

In an embodiment, the control information further includes: a time-domain resource field configured to contain resource indication information for determining a time-domain resource corresponding to each beam identifier.

Here, there may be one or more time-domain resource fields, and the resource indication information of each time-domain resource field may be used to indicate the time-domain resource.

In a possible embodiment, one time-domain resource field may indicate a time-domain resource corresponding to one beam identification field.

In a possible embodiment, one time-domain resource field may indicate a time-domain resource corresponding to a plurality of beam identification fields.

In this way, the resource indication information contained in the time-domain resource field enables the network controlled repeater to determine the time-domain resource corresponding to each beam identifier, and the network controlled repeater may perform beam-based data transmission based on the time-domain resource to realize the relay of mobile communication.

In an embodiment, there are N time-domain resource fields, and each time-domain resource field corresponds to one beam identifier; or there is one time-domain resource field, each beam identifier occupies one of time-domain sub-resources of the time-domain resource indicated by the resource indication information, and the time-domain sub-resources do not overlap with each other.

In a possible embodiment, there are N time-domain resource fields, and each time-domain resource field may correspond to one beam identification field.

In a possible embodiment, the time-domain resource fields may correspond to the beam identification fields in a one-to-one correspondence according to their respective orders in the control information.

In a possible embodiment, the resource indication information may adopt, but not limited to, the following form to indicate the time-domain resource: {X, Y, Z}, where X represents an offset between a starting slot of the time-domain resource and a slot for receiving the control information, Y represents a starting symbol of the time-domain resource in the starting slot, and Z represents the number of symbols lasted by the time-domain resource.

For example, the resource indication information is {1, 1, 10}. Assuming that the network controlled repeater receives DCI (control information) in slot#n, the beam may be transmitted in the 1st to 10th symbols in slot#n+1.

In a possible embodiment, each of the N beams may occupy a part of the time-domain resource indicated by the resource indication information, that is, occupy a time-domain sub-resource of the time-domain resource, and the time-domain sub-resources do not overlap with each other.

In an embodiment, there is one time-domain resource field, and the time-domain resource indicated by the resource indication information is evenly allocated to the N beam identifiers.

If the control information has only one time-domain resource field, and the resource indication information in the time-domain resource field indicates only one time-domain resource, the time-domain resource may be evenly allocated to the beams corresponding to the N beam identifiers for use.

In a possible embodiment, the N beams may occupy the time-domain resource in sequence according to the order of their corresponding beam identification fields.

For example, if the control information has only one time-domain resource field, and the resource indication information in the time-domain resource field indicates one time-domain resource {1, 1, 3}; and the control information has three beam identification fields, indicating three beam identifiers: beam#1, beam#2 and beam#3. Assuming that the network controlled repeater receives the DCI (control information) in slot#n, beam#1 is transmitted in the first symbol of slot#n+1; beam#2 is transmitted in the second symbol of slot#n+1; and beam#3 is transmitted in the third symbol of slot#n+1.

In this way, the network controlled repeater may determine the beam identifier and the time-domain resource of the beam that needs to communicate in the access link according to the control information, thereby realizing beam-based relay communication.

The order of the steps listed in the above embodiments is not intended to limit the execution order of the steps. The steps may be executed in the listed step order, or may not be executed in the listed step order, without contradiction. The individual steps may be implemented as separate embodiments without contradiction, or multiple steps may be combined together as an embodiment to implement.

The above embodiments may be implemented individually, or two or more embodiments may be combined together to implement if there is no contradiction.

In the above embodiments, the method for information transmission performed at the side of the network controlled repeater and the method for information transmission performed at the side of the access network may be in one to one correspondence, so the same explanations or features will not be repeated again, and reference may be made to the embodiments of the corresponding side.

An example is provided below in combination with any of the above embodiments:

> P1: DCI includes Lmax beam ID fields (i.e., beam identification fields) to indicate beam identifiers (IDs), and the value of Lmax (i.e., N) is configured via a first signaling (indication information for indicating N), for example, Lmax=8.
> P2: The value of Lmax is not greater than M, where M is the maximum number of beams supported by the access link.
> P3: Each beam ID field may indicate a special value (i.e., a preset value), indicating that the beam ID field does not indicate any valid beam.

> P4: The bitwidth of each beam ID field and/or the beam ID corresponding to each bit code (i.e., the association relationship between the beam indication information and the beam identifier) is configured by the base station via a third signaling (first configuration information).

Example 1: NCR-ap-beam::=[-1, 0, 1, 2, 7, 8] is configured via RRC, when it is indicated that the bit code=0, corresponding to NCR-ap-beam=-1, it means that no valid beam is indicated; when the bit code=2, it corresponds to beam ID#1.

Example 2: in a standard predefined manner, when bit codes indicate a special value (i.e., a preset value), such as all indicate 1, it means that no valid beam is indicated; other bit code valid values correspond to beam IDs, such as bit code = 1 corresponds to beam#1, and bit code = 7 corresponds to beam#7.

P5: When the beam IDs of all Lmax domains do not point to any beam, the Fwd function of NCR is considered to be dynamically closed.

P6: The correspondence between the beam ID field and the time-domain resource field is determined by a predefined rule. Tmax represents the number of time-domain resource fields.

When Tmax=Lmax, the beam ID field and the time-domain resource domain are in a one-to-one correspondence, for example, L1 corresponds to T1, and L2 corresponds to T2.

When Tmax=1, the resource indicated by the time-domain resource field is evenly allocated to individual beams.

The order of the steps listed in the above embodiments is not intended to limit the execution order of the steps. The steps may be executed in the listed step order, or may not be executed in the listed step order, without contradiction. The individual steps may be implemented as separate embodiments without contradiction, or multiple steps may be combined together as an embodiment to implement.

Embodiment 1:

N=10; a total of 10 beams may be used for the access link.

RRC configuration: Lmax=8; there are 8 fields in DCI to indicate beam IDs.

Bitwidth=3; each beam ID field in the DCI configured by RRC has 3 bits to indicate the beam ID; each bit code corresponds to a corresponding beam ID configured by RRC.

RRC configured NCR-ap-beam::=SEQUENCE (SIZE(1..8)) OF INTEGER(-1..9).

NCR-ap-beam::=-1, 0, 1, 2, 3, 4, 6, 9

There are Tmax time-domain resource fields, and Tmax = Lmax, and the time resource fields and the beam ID fields are in one-to-one correspondence. The meaning of the time resource field: {the offset between the starting slot and the slot for receiving control information, the starting symbol of the time-domain resource in the starting slot, the number of symbols that the time-domain resource lasts}.

The fields in DCI are as follows:

L1:1, corresponding beam#0
L2:4, corresponding beam#3
L3:8, corresponding beam#9
L4:0, corresponding to -1
L5:0, corresponding to -1
L6:0, corresponding to -1
L7:0, corresponding to -1
L8:0, corresponding to -1
T1: {1, 1, 10}
T2: {2, 6, 2}
T3: {2, 8, 3}
T4: {0, 0, 0}
T5: {0, 0, 0}
T6: {0, 0, 0}
T7: {0, 0, 0}
T8: {0, 0, 0}.

According to the above representation, the DCI indicates that three beams are to be sent in the access link of the NCR, and the beam IDs are beam#0, beam#3, and beam#9, respectively; assuming that the mobile termination of the network controlled repeater receives the DCI in slot#n, beam#0 is transmitted in the 1st to 10th symbols of slot#n+1; beam#3 is transmitted in the 6th to 7th symbols of slot#n+2; and beam#9 is transmitted in the 8th to 10th symbols of slot#n+2.

Embodiment 2:

N=10; a total of 10 beams may be used for the access link.

RRC configuration: Lmax=8; there are 8 fields in DCI to indicate beam IDs.

Bitwidth=4; calculated according to a predefined rule, each bit code directly corresponds to a beam ID.

Predefined rule: there are 10 beams in total, considering the special state, 11 state representations are required, at least 4 bits are required for the 11 states, and all states being 1 represents the special state.

There are Tmax time resources, and Tmax = 1. The time resource fields and the beam ID fields are in one-to-one correspondence. The meaning of the time resource fields: the fields in DCI are as follows:

L1:1, corresponding beam#1
L2:4, corresponding beam#4
L3:8, corresponding beam#8
L4:15, corresponding to special state, such as turn off
L5:15, corresponding to special state, such as turn off
L6:15, corresponding to special state, such as turn off
L7:15, corresponding to special state, such as turn off
L8:15, corresponding to special state, such as turn off
T1: {1, 1, 3}.

According to the above representation, the DCI indicates that three beams are to be sent on the access link of the NCR, and the beam IDs are beam#1, beam#4, and beam#8, respectively; assuming that the mobile termination of the network controlled repeater receives the DCI in slot#n, beam#1 is transmitted in the first symbol of slot#n+1; beam#4 is transmitted in the second symbol of slot#n+1; beam#8 is transmitted in the third symbol of slot#n+1.

As shown in FIG. 10, example embodiments of the present invention provide an apparatus 100 for information transmission, which is set in an access network device, and includes: a transceiver module 110.

The transceiver module 110 is configured to send control information containing N beam identification fields to a network controlled repeater, the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

In an embodiment, the transceiver module is further configured to: send the first configuration information to the network controlled repeater.

In an embodiment, the first configuration information is determined by the access network device; or the first configuration information is determined according to a predefined rule.

In an embodiment, in a case where the beam indication information is a preset value, the beam indication information does not indicate a valid beam identifier.

In an embodiment, the beam indication information contained by each of the N beam identification fields is the preset value, indicating that at least forwarding (FWD) function of the network controlled repeater is turned off.

In an embodiment, the control information further includes: a time-domain resource field configured to contain resource indication information for determining a time-domain resource corresponding to each beam identifier.

In an embodiment, there are N time-domain resource fields, and each time-domain resource field corresponds to one beam identifier; or there is one time-domain resource field, each beam identifier occupies one of time-domain sub-resources of a time-domain resource indicated by the resource indication information, and the time-domain sub-resources do not overlap with each other.

In an embodiment, there is one time-domain resource field, and the time-domain resource indicated by the resource indication information is evenly allocated to the N beam identifiers.

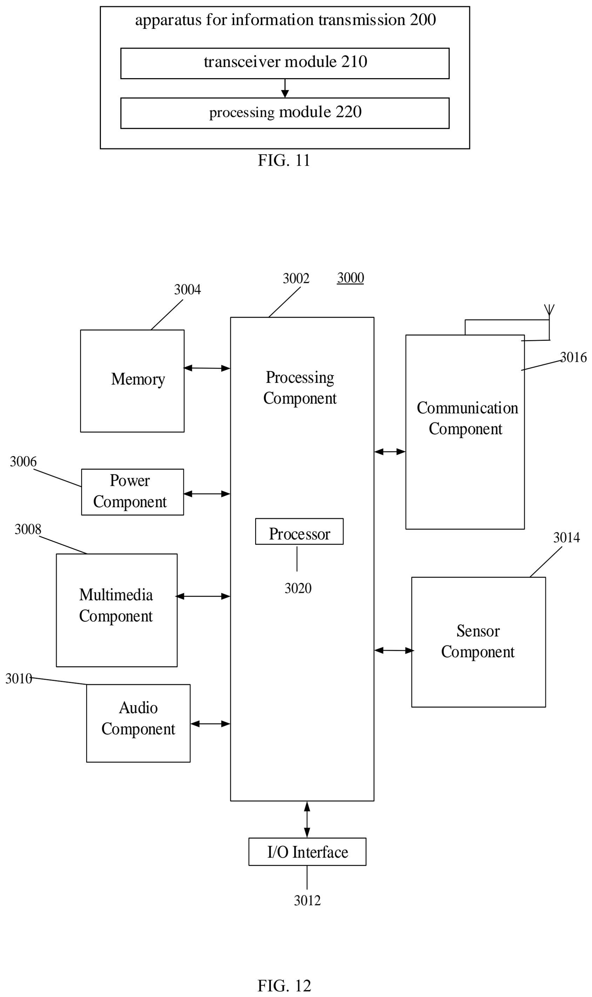

As shown in FIG. 11, example embodiments of the present invention provide an apparatus 200 for information transmission, which is set in a network controlled repeater, and includes a transceiver module 210.

The transceiver module 210 is configured to receive control information containing N beam identification fields from an access network device, the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

In an embodiment, the transceiver module is further configured to receive the first configuration information from the access network device.

In an embodiment, the first configuration information is determined by the access network device; or the first configuration information is determined according to a predefined rule.

In an embodiment, in a case where the beam indication information is a preset value, the beam indication information does not indicate a valid beam identifier.

In an embodiment, the apparatus further includes: a processing module 220 configured to: in response to the beam indication information contained by each of the N beam identification fields is a preset value, determine that at least forwarding (FWD) function of the network controlled repeater is turned off.

In an embodiment, the control information further includes a time-domain resource field configured to contain resource indication information for determining a time-domain resource corresponding to each beam identifier.

In an embodiment, there are N time-domain resource fields, and each time-domain resource field corresponds to one beam identifier; or there is one time-domain resource field, each beam identifier occupies one of time-domain sub-resources of a time-domain resource indicated by the resource indication information, and the time-domain sub-resources do not overlap with each other.

In an embodiment, there is one time-domain resource field, and the time-domain resource indicated by the resource indication information is evenly allocated to the N beam identifiers.

Embodiments of the present invention provide a communication device, which includes: a processor; and a memory for storing instructions executable by the processor; and the processor is configured to: implement the method for information transmission according to any embodiments of the present invention, when running the instructions.

In an embodiment, the communication device may include but is not limited to at least one of: a network controlled repeater or a network device. Here, the network device may include a core network or an access network device, etc. Here, the access network device may include a base station; and the core network may include an AMF or an SMF.

The processor may include various types of storage media, which are non-temporary computer storage media that still can memorize information stored thereon after the user equipment powers off.

The processor may be connected to the memory via a bus or the like, and may be used to read executable programs stored in the memory, such as at least one of the methods shown in FIG. 3 to FIG. 5.

Embodiments of the present invention also provide a computer storage medium having stored therein computer executable programs that, when executed by a processor, cause the method for information transmission according to any embodiment of the present invention to be implemented, such as at least one of the methods shown in FIG. 3 to FIG. 9.

Regarding the apparatus, device or storage medium in the above embodiments, the specific manner in which each module performs the operation has been described in detail in the embodiments with respect to the method, and will not be elaborated here.

FIG. 12 is a block diagram showing a user equipment 3000 according to an example embodiment. For example, the user equipment 3000 may be a mobile phone, a computer, a digital broadcast terminal, a messaging device, a game console, a tablet device, a medical device, a fitness device, a personal digital assistant, a network controlled repeater, or the like.

Referring to FIG. 12, the user equipment 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the user equipment 3000, such as the operations associated with display, phone calls, data communications, camera operations, and recording operations. The processing component 3002 may include one or more processors 3020 to execute instructions to perform all or some of the steps in the above-described methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the user equipment 3000. Examples of such data include instructions for any applications or methods operated on the user equipment 3000, contact data, phonebook data, messages, pictures, videos, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the user equipment 3000. The power component 3006 may include a power management system, one or more power sources, and any other components associated with the generation, management, and distribution of power in the user equipment 3000.

The multimedia component 3008 includes a screen providing an output interface between the user equipment 3000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3008 includes a front camera and/or a rear camera. The front camera and/or the rear camera may receive an external multimedia datum while the user equipment 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone (MIC) configured to receive an external audio signal when the user equipment 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 812 provides an interface between the processing component 3002 and peripheral interface modules, such as keyboards, click wheels, buttons, and the like. The buttons may include, but are not limited to, a home button, a volume button, a starting button, and a locking button.

The sensor component 3014 includes one or more sensors to provide status assessments of various aspects of the user equipment 3000. For instance, the sensor component 3014 may detect an open/closed status of the user equipment 3000, relative positioning of components, e.g., the display and the keypad, of the user equipment 3000, a change in position of the user equipment 3000 or a component of the user equipment 3000, a presence or absence of user contact with the user equipment 3000, an orientation or an acceleration/deceleration of the user equipment 3000, and a change in temperature of the user equipment 3000. The sensor component 3014 may include a proximity sensor configured to detect the presence of nearby objects without any physical contact. The sensor component 3014 may further include a light sensor, such as a CMOS or CCD image sensor, for use in imaging applications. In some embodiments, the sensor component 3014 may further include an accelerometer sensor, a gyroscope sensor, a magnetic sensor, a pressure sensor, or a temperature sensor.

The communication component 3016 is configured to facilitate communication, wired or wireless, between the user equipment 3000 and other devices. The user equipment 3000 can access a wireless network based on a communication standard, such as Wi-Fi, 4G, or 5G, or a combination thereof. In an illustrative embodiment, the communication component 3016 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the user equipment 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, there is also provided a non-transitory computer readable storage medium including instructions, such as included in the memory 3004, executable by the processor 3020 in the user equipment 3000, for completing the above method. For example, the non-transitory computer-readable storage medium may be a ROM, a random access memory (RAM), a CD-ROM, a magnetic tape, a floppy disc, an optical data storage device, and the like.

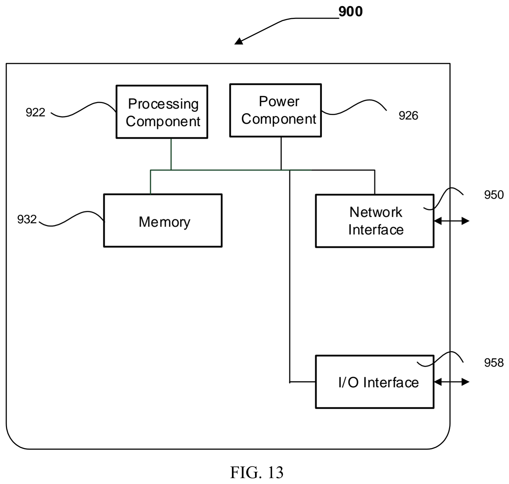

As shown in FIG. 13, an embodiment of the present invention shows a structure of a base station. For example, the base station 900 may be provided as a network-side device. Referring to FIG. 13, the base station 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any method of the aforementioned method applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSD TM or the like.

Other embodiments of the present invention will be apparent to those skilled in the art from consideration of the specification and practice of the present disclosed here. The present invention is intended to cover any variations, uses, or adaptations of the disclosure following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

**Claims**

1. A method for information transmission, applied to an access network device, comprising:
   sending control information containing N beam identification fields to a network controlled repeater, wherein the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

2. The method according to claim 1, further comprising: sending the first configuration information to the network controlled repeater.

3. The method according to claim 1 or 2, wherein the first configuration information is determined by the access network device; or
   the first configuration information is determined according to a predefined rule.

4. The method according to claim 1, wherein in a case where the beam indication information is a preset value, the beam indication information does not indicate a valid beam identifier.

5. The method according to claim 4, wherein the beam indication information contained by each of the N beam identification fields is the preset value, indicating that at least forwarding (FWD) function of the network controlled repeater is turned off.

6. The method according to any one of claims 1 to 5, wherein the control information further comprises a time-domain resource field configured to contain resource indication information for determining a time-domain resource corresponding to each beam identifier.

7. The method according to claim 6, wherein there are N time-domain resource fields, and each time-domain resource field corresponds to one beam identifier; or
   there is one time-domain resource field, and each beam identifier occupies one of time-domain sub-resources of a time-domain resource indicated by the resource indication information, wherein the time-domain sub-resources do not overlap with each other.

8. The method according to claim 7, wherein there is one time-domain resource field, and the time-domain resource indicated by the resource indication information is evenly allocated to the N beam identifiers.

9. A method for information transmission, applied to a network controlled repeater, comprising:
   receiving control information containing N beam identification fields from an access network device, wherein the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

10. The method according to claim 9, further comprising: receiving the first configuration information from the access network device.

11. The method according to claim 9 or 10, wherein the first configuration information is determined by the access network device; or
the first configuration information is determined according to a predefined rule.

12. The method according to claim 9, wherein in a case where the beam indication information is a preset value, the beam indication information does not indicate a valid beam identifier.

13. The method according to claim 9, further comprising:
in response to the beam indication information contained by each of the N beam identification fields is a preset value, determining that at least forwarding (FWD) function of the network controlled repeater is turned off.

14. The method according to any one of claims 9 to 13, wherein the control information further comprises a time-domain resource field configured to contain resource indication information for determining a time-domain resource corresponding to each beam identifier.

15. The method according to claim 14, wherein there are N time-domain resource fields, and each time-domain resource field corresponds to one beam identifier; or
there is one time-domain resource field, and each beam identifier occupies one of time-domain sub-resources of a time-domain resource indicated by the resource indication information, wherein the time-domain sub-resources do not overlap with each other.

16. The method according to claim 15, wherein there is one time-domain resource field, and the time-domain resource indicated by the resource indication information is evenly allocated to the N beam identifiers.

17. An apparatus for information transmission, set in an access network device, comprising:
a transceiver module, configured to send control information containing N beam identification fields to a network controlled repeater, wherein the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

18. An apparatus for information transmission, set in a network controlled repeater, comprising:
a transceiver module, configured to receive control information containing N beam identification fields from an access network device, wherein the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information.

19. A communication device, comprising:

a processor; and
a memory for storing instructions executable by the processor;
wherein the processor is configured to: implement the method for information transmission according to any one of claims 1 to 8 or claims 9 to 16, when running the instructions.

20. A computer storage medium having stored therein computer executable programs that, when executed by a processor, cause the method for information transmission according to any one of claims 1 to 8 or claims 9 to 16 to be implemented.

FIG. 1

FIG. 2

network controlled repeater

access network device

data communication

301: control information containing N beam identification fields is sent to a network controlled repeater, the beam identification field is configured to contain beam indication information for determining a beam identifier of an access link, N is less than or equal to M, M is a maximum number of beams supported by the access link, and at least one of N, an association relationship between the beam indication information and the beam identifier, or a bitwidth of each beam identification field is indicated by first configuration information

FIG. 3

```
┌─────────────────┐                      ┌─────────────────┐
│ network controlled │                    │  access network  │
│    repeater     │                      │     device       │
└─────────────────┘                      └─────────────────┘
         │                                        │
         │◄──────── data communication ──────────►│
         │                                        │
         │                                        │
         │  401：indication information indicating N is send to the │
         │         network controlled repeater    │
         │◄───────────────────────────────────────│
         │                                        │
         │                                        │
```

FIG. 4

```
┌─────────────────┐                      ┌─────────────────┐
│ network controlled │                    │  access network  │
│    repeater     │                      │     device       │
└─────────────────┘                      └─────────────────┘
         │                                        │
         │◄──────── data communication ──────────►│
         │                                        │
         │                                        │
         │  501: first configuration information is sent to the network │
         │            controlled repeater         │
         │◄───────────────────────────────────────│
         │                                        │
         │                                        │
```

FIG. 5

```
┌─────────────────┐                      ┌─────────────────┐
│ network controlled │                    │  access network  │
│    repeater     │                      │     device       │
└─────────────────┘                      └─────────────────┘
         │◄──────── data communication ──────────►│
         │                                        │
         │  601: control information containing N beam identification │
         │  fields is received from an access network device, the beam │
         │  identification field is configured to contain beam indication │
         │  information for determining a beam identifier of an access │
         │  link, N is less than or equal to M, M is a maximum number │
         │  of beams supported by the access link, and at least one of N, │
         │    an association relationship between the beam indication │
         │   information and the beam identifier, or a bitwidth of each │
         │  beam identification field is indicated by first configuration │
         │                     information          │
         │◄───────────────────────────────────────│
         │                                        │
```

FIG. 6

```
┌─────────────────────┐                    ┌─────────────────────┐
│  network controlled │                    │   access network    │
│      repeater       │                    │       device        │
└─────────────────────┘                    └─────────────────────┘
          │                                           │
          │◄────────── data communication ──────────►│
          │                                           │
          │                                           │
          │  701: indication information indicating N is received from
          │              an access network device
          │◄──────────────────────────────────────────│
          │                                           │
          │                                           │
```

FIG. 7

```
┌─────────────────────┐                    ┌─────────────────────┐
│  network controlled │                    │   access network    │
│      repeater       │                    │       device        │
└─────────────────────┘                    └─────────────────────┘
          │                                           │
          │◄────────── data communication ──────────►│
          │                                           │
          │                                           │
          │  801: first configuration information is received from access
          │                    network device
          │◄──────────────────────────────────────────│
          │                                           │
          │                                           │
```

FIG. 8

```
┌─────────────────────┐                    ┌─────────────────────┐
│  network controlled │                    │   access network    │
│      repeater       │                    │       device        │
└─────────────────────┘                    └─────────────────────┘
          │                                           │
          │◄────────── data communication ──────────►│
          │                                           │
 ┌────────────────────────────────────────┐          │
 │ 901: in response to the beam indication │          │
 │ information contained by each of the N  │          │
 │ beam identification fields is a preset  │          │
 │ value, it is determined that at least   │          │
 │ forwarding (FWD) function of the network│          │
 │ controlled repeater is turned off       │          │
 └────────────────────────────────────────┘          │
          │                                           │
```

FIG. 9

```
┌──────────────────────────────────────────────────┐
│      apparatus for information transmission 100    │
│                                                    │
│  ┌──────────────────────────────────────────────┐ │
│  │          transceiver module 110               │ │
│  └──────────────────────────────────────────────┘ │
└──────────────────────────────────────────────────┘
```

FIG. 10

apparatus for information transmission 200

transceiver module 210

processing module 220

FIG. 11

Memory 3004

Power Component 3006

Multimedia Component 3008

Audio Component 3010

Processing Component 3002

3000

Processor 3020

Communication Component 3016

Sensor Component 3014

I/O Interface 3012

FIG. 12

**900**

922 — Processing Component

Power Component — 926

932 — Memory

Network Interface — 950

I/O Interface — 958

FIG. 13

## INTERNATIONAL SEARCH REPORT

International application No.

**PCT/CN2023/072461**

### A. CLASSIFICATION OF SUBJECT MATTER

H04W72/044(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; 3GPP: 中继, 转发, 波束, 指示, 配置, 标识, 接入网设备, 基站, 接入链路, 服务链路, relay, NCR, beam, identity, indicate, access link, service link, access network device, base station, configuration

### C. DOCUMENTS CONSIDERED TO BE RELEVANT

| Category* | Citation of document, with indication, where appropriate, of the relevant passages | Relevant to claim No. |
|---|---|---|
| X | CN 114270910 A (BEIJING XIAOMI MOBILE SOFTWARE CO., LTD.) 01 April 2022 (2022-04-01) <br> description, paragraphs [0144]-[0504] | 1-20 |
| X | CN 115516813 A (BEIJING XIAOMI MOBILE SOFTWARE CO., LTD.) 23 December 2022 (2022-12-23) <br> description, paragraphs [0049]-[0257] | 1-20 |
| A | CN 114600380 A (QUALCOMM INC.) 07 June 2022 (2022-06-07) <br> entire document | 1-20 |
| A | CN 115606221 A (BEIJING XIAOMI MOBILE SOFTWARE CO., LTD.) 13 January 2023 (2023-01-13) <br> entire document | 1-20 |

☐ Further documents are listed in the continuation of Box C.    ☑ See patent family annex.

| | |
|---|---|
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **13 September 2023** | **22 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/072461**

| Patent document cited in search report | | | Publication date (day/month/year) | Patent family member(s) | Publication date (day/month/year) |
|---|---|---|---|---|---|
| CN | 114270910 | A | 01 April 2022 | None | |
| CN | 115516813 | A | 23 December 2022 | None | |
| CN | 114600380 | A | 07 June 2022 | None | |
| CN | 115606221 | A | 13 January 2023 | None | |